(19)

Europäisches
Patentamt
European
Patent Office
Office européen
des brevets

(11)     EP 3 057 046 A1

(12)                    **EUROPEAN PATENT APPLICATION**

(43) Date of publication:
**17.08.2016  Bulletin 2016/33**

(51) Int Cl.:
**G06Q 10/10** *(2012.01)*        **G06Q 10/06** *(2012.01)*

(21) Application number: **16155397.9**

(22) Date of filing: **12.02.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **13.02.2015  IN 480MU2015**

(71) Applicant: **Tata Consultancy Services Limited Maharashtra (IN)**

(72) Inventors:
 • **SAHU, Kuleshwar**
   **411013 Pune, Maharashtra (IN)**

 • **Palshikar, Girish Keshav**
   **411013 Pune, Maharashtra (IN)**
 • **Srivastava, Rajiv Radheyshyam**
   **411013 Pune, Maharashtra (IN)**
 • **Jain, Ankita**
   **411013 Pune, Maharashtra (IN)**
 • **Gupta, Mohit**
   **411013 Pune, Maharashtra (IN)**
 • **Gharote, Mangesh Sharad**
   **411013 Pune, Maharashtra (IN)**

(74) Representative: **Goddar, Heinz J.**
   **Boehmert & Boehmert**
   **Anwaltspartnerschaft mbB**
   **Patentanwälte Rechtsanwälte**
   **Pettenkoferstrasse 20-22**
   **80336 München (DE)**

(54)    **METHOD AND SYSTEM FOR EMPLOYEE ASSESMENT**

(57)    This disclosure relates generally to employee assessment, and more particularly to identification of high potential employees. A method and system is provided for identifying employees with high potential. The present method and system for selecting a set of employees for testing and then selecting attributes of the employees using various feature extraction techniques. Thereafter, the method includes combining attributes selected from the feature extraction techniques. After combining the attributes, the method may include utilizing a classification or ranking model to label employees as high and non-high potential employees. Further, the method includes receiving attributes and a reference set of employees from a user. Thereafter, a distance based approach is utilized to identify high potential employees.

**FIG. 3**

**Description**

<u>Priority Claim</u>

The present application claims priority to: India Application No. 480/MUM/2015, filed on February 13th, 2015. The entire contents of the aforementioned application are incorporated herein by reference.

<u>Technical Field</u>

This disclosure relates generally to assessment of employees, and more particularly to a method and system for identifying high potential employees..

<u>Background</u>

Organizations that witness significant progress in market are usually driven by sophisticated business processes, compliances and well defined strategic plan. To continue in a competent environment, every organization shows significant interest to assess its processes and resources to build efficient decision making system. The organizations also look at its human resources to build a competent talent pool which leads to the necessity of Human Capital Valuation.
In the context of the employee's assessment, identification and retention of the high potential employees in the organization is important to achieve business success and sustainability.
The inventors here have recognized several technical problems with such conventional systems, as explained below. Existing systems for employee assessment focus on the economic value of the individual in an organization. Few existing systems employ performance data for employee assessment. Such systems do not take the HCV into account for employee assessment. Some conventional methods for estimating HCV for employees of the organization include monitoring intellectual capital of an employee. In such methods, a set of metrics is utilized for analysis based on which the intellect capital is estimated for an employee. Thereafter, an intellectual capital benchmark is used to enable the organization to quantitatively and qualitatively measure and monitor intellectual capital of the employee.
However, the conventional methods do not provide a generalized technique to identify high potential employees and are mainly driven by the performance data and subjective, partial domain knowledge. The existing methods do not consider effect of other data, such as, individual skill set and organizational experiences, collectively referred to as assessment data, which can also be criteria for the identification of the high potential. Such performance data is usually reviewed by another human or by a concerned resource which leads to dependency on human domain knowledge. Also, there is a possibility of having insufficient information about domain knowledge due to unavailability of data related to employees.
Further, prior art literature never explores the impact of high potential employees over the organizational units to assess the organizational performance in context of individual high potential performance.

**SUMMARY**

Embodiments of the present disclosure present technological improvements as solutions to one or more of the above-mentioned technical problems recognized by the inventors in conventional systems. For example, in one embodiment, the present application provides a computer implemented method for high potential employee identification, wherein said method comprises processer implemented steps of generating, a Human Capital Value (HCV) data model. In an embodiment the HCV data model comprises attributes for each employee of an organization. Further the method comprises receiving, one or more employees to be classified into high potential employees and non-high potential employees. The method further comprises receiving, all attributes for the one or more employees from the HCV data model. A plurality of attributes are selected as important attributes for the one or more employees from all attributes. In an embodiment the selection is based on either a plurality of feature extraction techniques or user input or both. The method further comprises generating a combined attribute set. In an embodiment generating the combined attribute set comprises steps of ranking the plurality of attributes based on distinguishing capability among high potential employees and non-high potential employees; and combining, a predefined number of top ranking attributes of each of the plurality of feature extraction technique or user input. Further the method comprises identifying, the high potential employees, by labelling each of the one or more employees as high potential employees or non-high potential employees wherein the labelling is performed using at least one of classification model based approach and reference set based approach and is based on the combined attributes set.
In another embodiment, The present application provides a system; said system (200) comprising a processor; a data bus coupled to said processor; and a computer-usable medium embodying computer code, said computer-usable medium being coupled to said data bus, said computer program code comprising instructions executable by said processor and configured to generate, a Human Capital Value (HCV) data model. In an embodiment the HCV data model comprises attributes for each employee of an organization. Further the system is configured to receive, one or more employees to be classified into high potential employees and non-high potential employees and receive, all attributes for the one or more employees from the HCV data model. The system is further configured to select, a plurality of attributes as important attributes for the one or more employees from all attributes. In an embodiment the selection is based on either a plurality of feature extraction techniques or user input or both. The system is further configured to generate a combined attribute set, wherein generating a combined attribute set comprises ranking the plurality of attributes based on distinguishing capability among high potential employees and non-high potential employees; and combining, a predefined number of top ranking attributes of each of the plurality of feature extraction technique. The system identifies, the high potential employees, by labelling each of the one or more employees as high potential employees or non-high potential employees wherein the labelling is performed using at least one of classification model based approach and reference set based approach and is based on the combined attribute set.

In yet another embodiment, the application provides a computer program product for controlling access to a resource of an electronic device, the computer program product comprising a non-transitory computer readable storage medium having program instructions embodied therewith, the program instructions executable by a processor to cause the processor to perform a method comprising generating, a Human Capital Value (HCV) data model. In an embodiment the HCV data model comprises attributes for each employee of an organization. Further the method comprises receiving, one or more employees to be classified into high potential employees and non-high potential employees. The method further comprises receiving, all attributes for the one or more employees from the HCV data model. A plurality of attributes are selected as important attributes for the one or more employees from all attributes. In an embodiment the selection is based on either a plurality of feature extraction techniques or user input or both. The method further comprises generating a combined attribute set. In an embodiment generating the combined attribute set comprises steps of ranking the plurality of attributes based on distinguishing capability among high potential employees and non-high potential employees; and combining, a predefined number of top ranking attributes of each of the plurality of feature extraction technique or user input. Further the method comprises identifying, the high potential employees, by labelling each of the one or more employees as high potential employees or non-high potential employees wherein the labelling is performed using at least one of classification model based approach and reference set based approach and is based on the combined attributes set.

It is to be understood that both the foregoing general description and the following detailed description are exemplary and explanatory only and are not restrictive of the invention, as claimed.

## BRIEF DESCRIPTION OF THE DRAWINGS

The accompanying drawings, which are incorporated in and constitute a part of this disclosure, illustrate exemplary embodiments and, together with the description, serve to explain the disclosed principles.

**FIG. 1** shows a illustrative example of various attributes of a Human Capital Value (HCV) data model in accordance with an embodiment of the present invention
**FIG. 2** shows a block illustrative architecture for a system for identification of high potential employees in accordance with an embodiment of the present invention;
**FIG. 3** shows a flowchart illustrating a method for identification of high potential employees in accordance with an embodiment of the present invention;
**FIG. 4** shows a flowchart illustrating a method for identification of high potential employees based on user analysis, in accordance with an embodiment of the present invention.

## DETAILED DESCRIPTION

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the spirit and scope of the disclosed embodiments. It is intended that the following detailed description be considered as exemplary only, with the true scope and spirit being indicated by the following claims.

The method described herein focuses on Human Capital Value (HCV) of the organization due to which an assessment of the organizational performance in context of individual high potential performance of high potential employees is obtained. Further in an embodiment the present application discloses a standard HCV model that can be used with variety of inputs for estimating the identification results.

In an implementation of the present subject matter, the method may include identifying employees with high potential at various positions in the organization by creating an HCV model that includes knowledge of HCV dimension and attributes such as demographics, skill set, organizational experiences, training and certifications, efforts and project related data of an employee. The HCV model may also include extensible techniques to extract relevant assessment data from the back-end database of the enterprise applications of the organization. To make identification of high potential employees more efficient, the attributes can be transformed with respect to time period such as leadership efforts per year, number of certification per year, and courses per year. For each attribute both accumulation and rate of accumulation variables are generated to obtain accurate identification.

The method may include identifying high potential employees. In an embodiment one or more employees are selected for evaluation. The one or more employees may be used as testing and training data from available data of employees. Thereafter, attributes corresponding to the one or more employees may be selected. The attributes may be selected by utilizing feature extraction techniques. Such attributes may be associated with the performance, experience and domain knowledge of the employee and enable the organization to estimate the identification results. In an implementation of the present subject matter, the method includes selecting the attribute through both user analysis and data analysis. In user analysis, a user can select the attributes on which a method may be implemented to determine high potentials. In the data analysis, feature extraction technique that is based on system data such as Chi-square and information gain is utilized to select the attributes from the HCV model. The attributes may be selected using past assessment data which are significantly different in high potential employees.

Thereafter, the attributes of various features are combined. After combining the features, the method may further include utilizing a classification model for labeling high and non-high potential of employees.

In an embodiment, the present subject matter provide enhanced identification of high potential employees in an organization. The method includes utilizing a HCV model that contains variety of parameters such as, leadership, technical, domain. The HCV model may also contain additional parameters associated with courses and certifications of employees, organizational experience, proficiency levels, roles count and project related attributes. Further the method utilizes HCV for each employee for identifying high potential employees.

The described method provides both user domain knowledge driven as well as data driven high potential identification. The method is observed to give effective results in comparison to manual high potential identification. Also, the described method provides facility to have high potential distribution over various organizational units across levels such as account and project level. The method may further validate that highly competent group of employees imply high project success. Utilizing the method, an organization which is having less competent human resources may be subjected to reforms in organization unit to improve the productivity. Further, the method also validates the results with the manually created high potential list to check the extent of alignment with data based high potential identification.

It should be noted that the description merely illustrates the principles of the present subject matter. It will thus be appreciated that those skilled in the art will be able to devise various arrangements that, although not explicitly described herein, embody the principles of the present subject matter and are included within its spirit and scope. Furthermore, all examples recited herein are principally intended expressly to be only for explanatory purposes to aid the reader in understanding the principles of the invention and the concepts contributed by the inventor(s) to furthering the art, and are to be construed as being without limitation to such specifically recited examples and conditions.

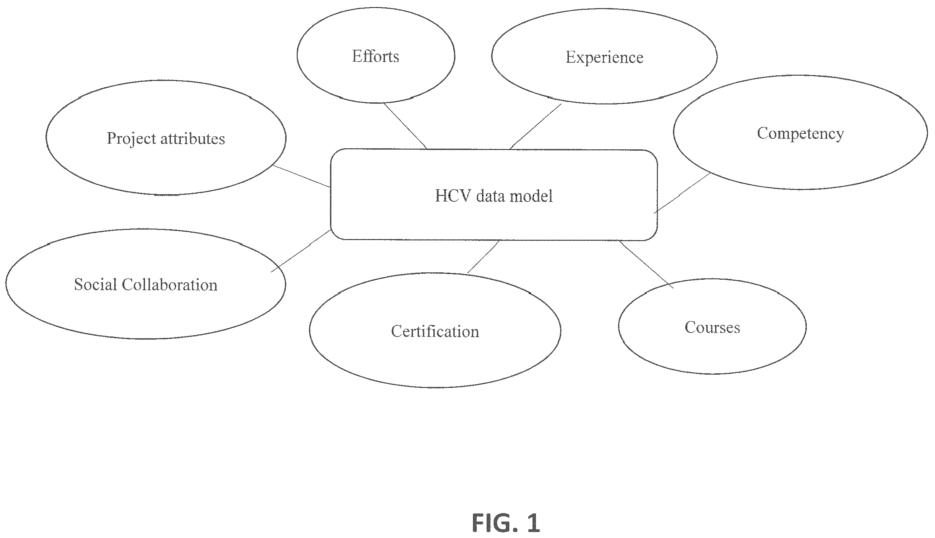

Referring to Fig. 1 an exemplary illustration of a HCV data model is shown in accordance with an embodiment of the disclosed subject matter. Further the corresponding attributes for the HCV data model is illustrated in Table 1.

Table 1

| S No. | Attribute |
|-------|-----------|
| 1 | Number of years of Education after Class XII |
| 2 | Post-graduate (Y/N) |
| 3 | Total Experience (years) |
| 4 | Total Efforts (person days) |
| 5 | Total Efforts in leadership roles (person days) |
| 6 | % of Total Efforts in ASS leadership roles |
| 7 | Total Efforts in iCALMS leadership roles (person days) |
| 8 | % of Total Efforts in iCALMS leadership roles |
| 9 | Total Efforts in senior designations (person days) |
| 10 | % of Total Efforts in senior designations |

(continued)

| S No. | Attribute |
|---|---|
| 11 | Total Efforts in experience range 3-10 years (person days) |
| 12 | % of Total Efforts in experience range 3-10 years |
| 13 | Total Efforts in experience range >10 years (person days) |
| 14 | % of Total Efforts in experience range >10 years |
| 15 | Total efforts overseas (person days) |
| 16 | % of Total efforts overseas |
| 17 | % of Total efforts which were billed |
| 18 | Count of E3 + E4 in Technical skills |
| 19 | Count of E3 + E4 in Domain skills |
| 20 | Number of Courses (All) |
| 21 | Number of Technical courses |
| 22 | Number of Domain courses |
| 23 | Number of Leadership courses |
| 24 | Number of Soft skills courses |
| 25 | Number of Other courses |
| 26 | Number of External technical certifications |
| 27 | Number of External domain certifications |
| 28 | Number of Grievances raised |
| 29 | Number of Performance appraisal related disagreements |
| 30 | Number of Projects worked on |
| 31 | Number of Customers worked for |
| 32 | Number of Platforms (technical) worked on |
| 33 | Number of Technology used |
| 34 | Number of Application areas |
| 35 | Number of iCALMS Roles |
| 36 | Number of Patents |
| 37 | Number of Papers |
| 38 | Number of White papers + #Articles |
| 39 | Number of Awards and recognition outside organization |
| 40 | Number of Awards and recognition within organization |
| 41 | Number of Events / conferences attended |
| 42 | Number of Rewards (or points) |
| 43 | Number of Social interaction index |
| 44 | Number of Grievances raised |
| 45 | Number of Performance appraisal related disagreements |
| 46 | Number of Projects worked on |
| 47 | Number of Customers worked for |
| 48 | Number of Platforms (technical) worked on |

(continued)

| S No. | Attribute |
|---|---|
| 49 | Number of Technology used |
| 50 | Number of Application areas |
| 51 | Number of iCALMS Roles |
| 52 | Number of Patents |
| 53 | Number of Papers |
| 54 | Number of White papers + #Articles |
| 55 | Number of Awards and recognition outside organization |
| 56 | Number of Awards and recognition within organization |

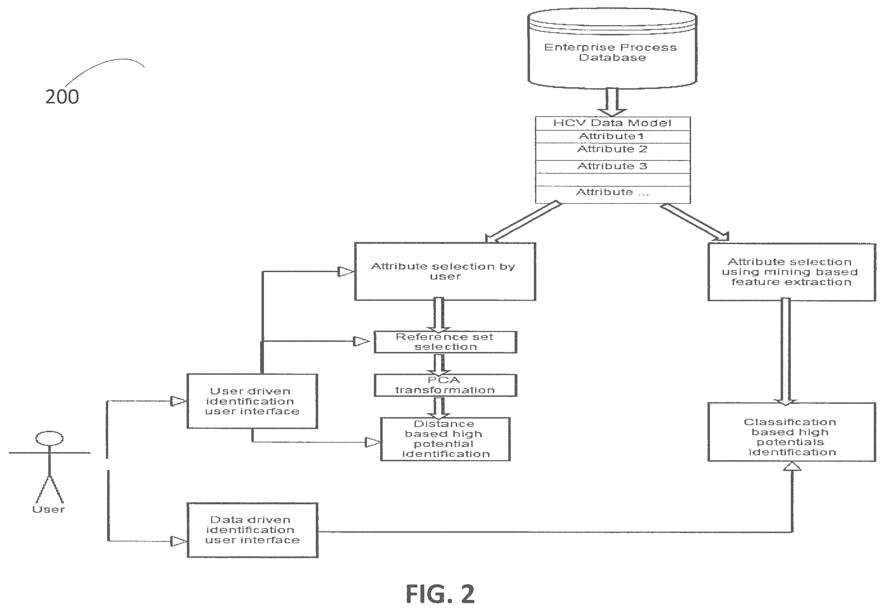

Referring now to Fig. 2, a High potential identification system involves creation of HCV model using the Enterprise Process Database is illustrated according to an embodiment of the disclosed subject matter. In an aspect the HCV model consists of all HCV attributes that can be evaluated using the Enterprise Process Database. The HCV data model is taken as input in both user driven approach and data driven approach. In user driven approach, user has to select two sets of information, first one is attribute set which have distinguishing criteria for the high potential identification and second one is identifying a reference set of known high potential employees, by their HCV attributes. The distance between the user-provided reference set of employees and remaining employees in terms of HCV attributes is used. Further in an aspect of the disclosed subject matter, calculation of the distance from the reference set has been done in PCA space. On the basis of the distance from the reference set, each employee is labeled as high potential or not while in data driven approach the system identifies the attribute set using feature extraction techniques. Further, Classification techniques are used to learn the feature based generative and discriminative models of high potential employees and label other employees accordingly.

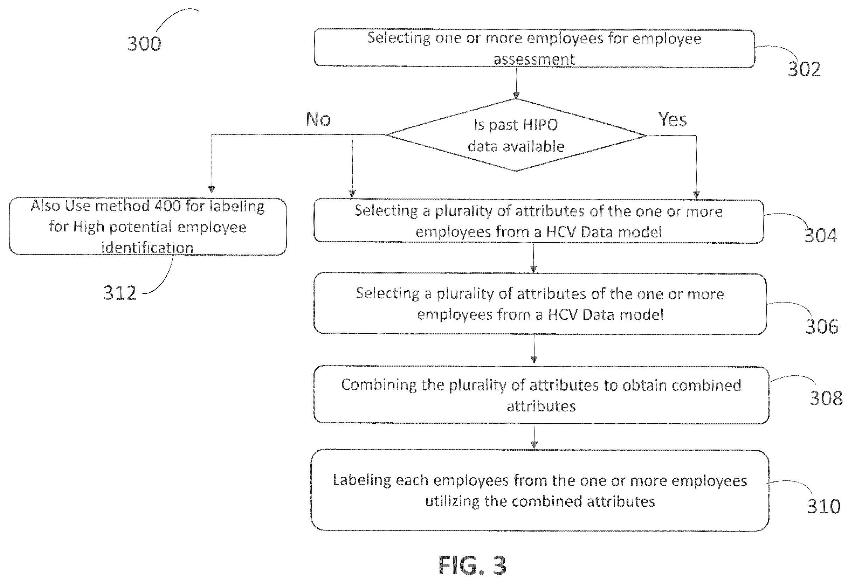

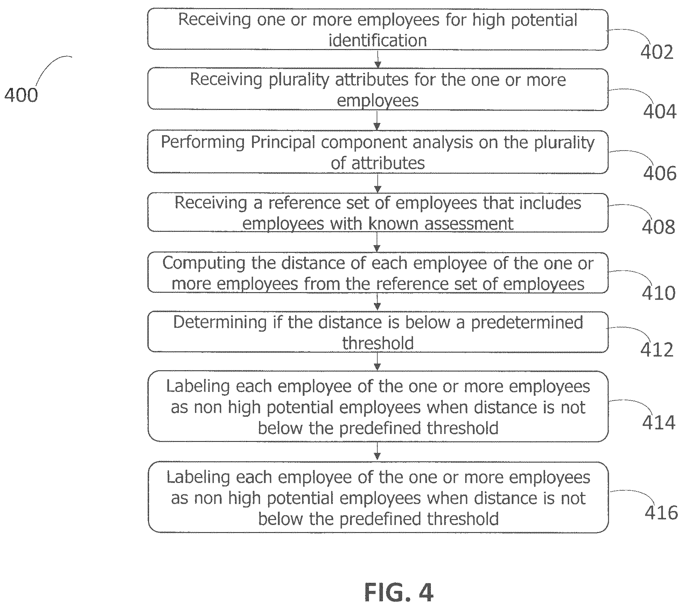

Figs. 3 and 4 illustrate methods 300 and 400 respectively. The order in which the methods 300 and 400 are described is not intended to be construed as a limitation, and any number of the described method steps may be combined in any order to implement the methods 300 and 400 or alternative methods. Furthermore, the methods 300 and 400 may be implemented by processor(s) or computing system(s) through any suitable hardware, non-transitory machine readable instructions, or combination thereof.

Fig. 3 illustrates a method 300 of identifying high potential employees in an organization based on Human Capital Value data model. At step 302, one or more employee to be evaluated for employee assessment is selected for the organization. In an embodiment data for employees with known assessment may also be available as illustrated at step 312, in said embodiment, as illustrated by the figure, this data may be provided as reference data for labelling. This will further be explained in the following paragraphs with reference to Fig. 4. In an embodiment, the previous high potential data maybe utilized as training data with labeled high potential status. After selecting the one or more employees, attributes for the one or more employees may be selected from an attribute set of the HCV data model. In an implementation, the attributes are selected using feature extraction techniques over training data at step 304. In an implementation of the present subject matter, the method includes identifying attributes for E-HIPO selection.

In yet another example implementation, the method utilizes information gain for identification of attributes. In the said example implementation, a specific function "InfoGainAttributeEval" is utilized to evaluate worth of an attribute by measuring the information gain with respect to a class. Further in another example implementation, the method utilizes standard Weka based feature extraction technique for the identification of attributes.

In another exemplary implementation, the method includes utilizing a chi square ($X2$) test. In the chi square test, the method is used to evaluate features individually by measuring their chi- squared statistics with respect to the classes.

In yet another exemplary implementation, a distribution distance based technique can be used to identify the important attributes and select top 'k' values using a predefined criteria, such that the predefined criteria depends on a mean and a variance.

Thereafter, at the step 306, the attributes of various feature extraction techniques may be combined to obtain combined attribute set. At step 308, a classification model may be utilized to label each employee as high and non-high potential employee. The classification model may use the combined attribute set to label each employee. In an embodiment, the Evaluated High Potential Employee (E-HIPO) selection is performed based on the classification. In the classification, a LibSVM model may be used for labeling employees. The model may use a support vector machine (SVM) as a discriminative classifier formally defined by a separating hyper plane. Such a model using SVM may be trained using a labeled assessment data for supervised learning and then may be utilized to provide an optimal hyper plane which categorizes new assessment data examples. SVM based classification works on the principle of maximum margin as provide in equation (1).

$$\text{margin} \equiv \arg\min_{x \in D} d(x) = \arg\min_{x \in D} \frac{|x \cdot w + b|}{\sqrt{\sum_{i=1}^{d} w_i^2}}$$

(1)

In another exemplary implementation, a Naive Bayes Classifier technique, which is based on Bayesian theorem and is particularly suited when the dimensionality of inputs is high, is used for classification. Naive Bayes classification model can be represented by using the posterior probability as illustrated by equation (2).

$$\hat{y} = \arg\max_{k \in 1\dots K} p(C_k) \prod_{i=1}^{n} p(x_i | C_k)$$

(2)

In yet another exemplary implementation, a J48 classification that uses a decision tree may be utilized. A decision tree can be understood as a predictive machine learning module that decides the target value (dependent variable) of a new sample based on various attribute values of the available data. The internal nodes of the decision tree denote different attributes, and the branches between the nodes denotes the possible values that these attributes can have in observed samples. The terminal node denotes the final value (classification) of the dependent variable.

In an implementation of the present subject matter, closeness between an attribute of an employee profile to high probability distribution of high potential employees is determined. The attribute may then be identified as important if the attribute value distribution is showing large distance between the distributions for high potential and non-high potential employees. The attribute value for an employee may be flagged as important if the attribute value is close to significant part having high probability distribution for high potential employees. Similarly, other identified important attributes from the employee profile and important attributes from other employee profiles may also be flagged. Thereafter, ranking may be performed based on the total number of flags raised for an employee based on number of identified important attributes flagged as important in an employee profile. The corresponding empirical constant values that are specific to the data can then be generated by using grid search technique that utilizes available past data.

In an implementation of the present subject matter, relevant attributes identified using feature extraction are percentile ranked between 0 to 100 and average of the attributes have been taken for the ranking of employees. In the implementation, the employees with top ranks are considered high potential employees. For the sake of explanation, the description of performing user driven high potential identification has been further explained with reference to Fig.4.

Fig. 4 illustrates the method 400 for identifying employees with high potential based on user analysis. At step 402, one or more employees are received for employee assessment. The one or more employees may be a set of employees from where the organization may intend to identify high potential employees. At step 404, the method may include receiving attributes for the one or more employees from the attribute set of the HCV data model according to the user knowledge. The attributes may be received using the feature selection techniques. In the implementation, the user may select important attributes for the EHIPO identification. A list of attributes is then prepared using domain knowledge and statistical analysis. Further, the user can select a subset or the entire set of the attributes for further analysis.

Thereafter, a Principal Component Analysis (PCA) transformation is performed on the received attributes selected by the user at step 406. At step 408, the method may include receiving a reference set of employees into a system where the reference set of employees include employees with known assessment. In an implementation of the present subject matter, the reference set of employees may be identified based on domain knowledge. In an example, employees having higher experience, leadership efforts, competency, courses and certification can be considered as reference set of employees. In another implementation of the present subject matter, the user may select the reference set of employees for each grade by providing various criteria for building the reference set. For instance, for a particular grade, reference set conditions for leadership HCV dimensions are, organization experience greater than 5 years, competency at superior level, and percentage of leadership efforts out of total efforts greater than 80.

After identifying the reference set of employees, at step 410, distance of each employee from the reference set of employees is computed. In an implementation, EHIPO identification is performed by computing leadership, technical and domain distances for each employee from the reference set of employees as provided by the user. In an example implementation, a predefined threshold value of the distance may be estimated using quartile statistics, and then distances below the predefined threshold are considered as E-HIPO. In another example implementation, the method may include utilizing Mahalanobis distance approach in multivariate data for calculating the distance. It will be understood that if distance calculation data set is under PCA space it implies that data sets are converted in principle components.

At step 412, the method includes determining whether the distance is below the predefined threshold value. If the distance is not below the predefined threshold, then at step 414, the employees are labelled as non-high potential employees. On the contrary, the employees are labelled as high potential employees at step 416 when the distance is below the predefined threshold. In an example implementation, the identification of high potential employees is based on grades G1 to G5. This means that each grade is associated with a reference set of employees and may be estimated based on HCV categories like leadership, technical and domain expertise. For each employee in each grade, a distance from a corresponding reference set centroid is calculated. In an implementation of the present subject matter, appropriate smaller distance thresholds are set such that the employees can be labelled as E-HIPO. The method also provides an option to the user of selecting an HCV dimension such as leadership, technical, and domain on which high potentiality can be evaluated.

In an implementation of the of the present subject matter, the employees identified with high potential based on assessment data are validated against the employees identified with high potential based on user analysis. Such a validation may help in determining if the employees identified based on user analysis are correctly identified as high potential employees or not.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope and spirit of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope and spirit of disclosed embodiments being indicated by the following claims.

**Claims**

1. A method for identification of high potential employees; said method comprising processor implemented steps of:

generating, a Human Capital Value (HCV) data model, wherein the HCV data model comprises attributes for each employee of an organization;
receiving, one or more employees to be classified into high potential employees and non-high potential employees;
receiving, all attributes for the one or more employees from the HCV data model;
selecting, a plurality of attributes as important attributes for the one or more employees from all attributes, wherein selection is based on either a plurality of feature extraction techniques or user input;
generating a combined attribute set, wherein generating a combined attribute set comprises:

ranking the plurality of attributes based on distinguishing capability among high potential employees and non-high potential employees.; and
combining, a predefined number of top ranking attributes of each of the plurality of feature extraction technique; and

identifying, the high potential employees, by labelling each of the one or more employees as high potential employees or non-high potential employees wherein the labelling is performed using at least one of classification model based approach and reference set based approach and is based on the combined attribute set.

2. The method according to claim 1, wherein the HCV data model is generated based on attributes of each employee, such that attributes are extracted from a backend database of an employee organization's enterprise application wherein the attributes comprise demographics, skill set, organizational experiences, training and certifications, efforts and project related data of an employee.

3. The method according to claim 1, wherein the plurality attributes are selected using a plurality of feature extraction techniques such that the plurality of feature extraction techniques comprise one or more of Weka based feature extraction techniques.

4. The method according to claim 1, wherein the classification model based approach comprises:

using at least one of Weka based classification techniques for classification of employees; and
ranking the employees based on the combined attribute set wherein the higher ranked employees are labelled as high potential employees.

5. The method according to claim 1, wherein the reference set based approach comprises:

performing principle component analysis (PCA) on the selected plurality of attributes;
receiving a reference set of employees comprising employees who are identified as high performance employees on the basis of having exceptional attributes than others, wherein the reference set is created based on predefined criteria;
calculating, the distance between the one or more employees and the reference set of employees, wherein distances calculation dataset is under PCA space and uses Mahalanobis distance calculation approach;
deriving, a threshold value of distance using quartile statistics; and
labelling each of the plurality of employees below the threshold value as high potential employees.

6. A system for identification of high potential employees; said system comprising a processor and a memory coupled to the processor, comprising computer implemented instruction to:

generate, a Human Capital Value (HCV) data model, wherein the HCV data model comprises attributes for each employee of an organization;
receive, one or more employees to be classified into high potential employees and non-high potential employees;
receive, all attributes for the one or more employees from the HCV data model;
select, a plurality of attributes as important attributes for the one or more employees from all attributes, wherein selection is based on either a plurality of feature extraction techniques or user input;
generate a combined attribute set, wherein generating a combined attribute set comprises:

ranking the plurality of attributes based on distinguishing capability among high potential employees and non-high potential employees.; and
combining, a predefined number of top ranking attributes of each of the plurality of feature extraction technique; and

identify, the high potential employees, by labelling each of the one or more employees as high potential employees or non-high potential employees wherein the labelling is performed using at least one of classification model based approach and reference set based approach and is based on the combined attribute set.

7. The system according to claim 6, wherein the HCV data model is generated based on attributes of each employee, such that attributes are extracted from a backend database of an employee organization's enterprise application wherein the attributes comprise demographics, skill set, organizational experiences, training and certifications, efforts and project related data of an employee.

8. The system according to claim 6, wherein the plurality attributes are selected using a plurality of feature extraction techniques such that the plurality of feature extraction techniques comprise one or more of Weka based feature extraction techniques.

9. The method according to claim 6, wherein the classification model based approach comprises:

   using at least one of Weka based classification techniques for classification of employees; and
   ranking the employees based on the combined attribute set wherein the higher ranked employees are labelled as high potential employees.

10. The method according to claim 6, wherein the reference set based approach comprises:

   performing principle component analysis (PCA) on the selected plurality of attributes;
   receiving a reference set of employees comprising employees who are previously identified as high performance employees, wherein the reference set is based on predefined criteria;
   calculating, the distance between the one or more employees and the reference set of employees, wherein distances calculation dataset is under PCA space and uses Mahalanobis distance calculation approach;
   deriving, a threshold value of distance using quartile statistics; and
   labelling each of the plurality of employees below the threshold value as high potential employees.

11. A computer program product for controlling access to a resource of an electronic device, the computer program product comprising a non-transitory computer readable storage medium having program instructions embodied therewith, the program instructions executable by a processor to cause the processor to perform a method comprising:

   generating, a Human Capital Value (HCV) data model, wherein the HCV data model comprises attributes for each employee of an organization;
   receiving, one or more employees to be classified into high potential employees and non-high potential employees;
   receiving, all attributes for the one or more employees from the HCV data model;
   selecting, a plurality of attributes as important attributes for the one or more employees from all attributes, wherein selection is based on either a plurality of feature extraction techniques or user input;
   generating a combined attribute set, wherein generating a combined attribute set comprises:

      ranking the plurality of attributes based on distinguishing capability among high potential employees and non-high potential employees.; and
      combining, a predefined number of top ranking attributes of each of the plurality of feature extraction technique; and

   identifying, the high potential employees, by labelling each of the one or more employees as high potential employees or non-high potential employees wherein the labelling is performed using at least one of classification model based approach and reference set based approach and is based on the combined attribute set.

12. The Computer program product according to claim 11, wherein the HCV data model is generated based on attributes of each employee, such that attributes are extracted from a backend database of an employee organization's enterprise application wherein the attributes comprise demographics, skill set, organizational experiences, training and certifications, efforts and project related data of an employee.

13. The computer program product according to claim 11, wherein the plurality attributes are selected using a plurality of feature extraction techniques such that the plurality of feature extraction techniques comprise one or more of Weka based feature extraction techniques.

14. The computer program product according to claim 11, wherein the classification model based approach comprises:

   using at least one of Weka based classification techniques for classification of employees; and
   ranking the employees based on the combined attribute set wherein the higher ranked employees are labelled as high potential employees.

15. The computer program product according to claim 11, wherein the reference set based approach comprises:

   performing principle component analysis (PCA) on the selected plurality of attributes;
   receiving a reference set of employees comprising employees who are identified as high performance employees on the basis of having exceptional attributes than others, wherein the reference set is created based on predefined criteria;

calculating, the distance between the one or more employees and the reference set of employees, wherein distances calculation dataset is under PCA space and uses Mahalanobis distance calculation approach;

deriving, a threshold value of distance using quartile statistics; and

labelling each of the plurality of employees below the threshold value as high potential employees.

**FIG. 1**

Social Collaboration

Project attributes

Certification

HCV data model

Efforts

Courses

Experience

Competency

FIG. 2

EP 3 057 046 A1

300

Selecting one or more employees for employee assessment

302

No          Is past HIPO          Yes
            data available

Also Use method 400 for labeling for High potential employee identification

312

Selecting a plurality of attributes of the one or more employees from a HCV Data model

304

Selecting a plurality of attributes of the one or more employees from a HCV Data model

306

Combining the plurality of attributes to obtain combined attributes

308

Labeling each employees from the one or more employees utilizing the combined attributes

310

FIG. 3

400

Receiving one or more employees for high potential identification

402

Receiving plurality attributes for the one or more employees

404

Performing Principal component analysis on the plurality of attributes

406

Receiving a reference set of employees that includes employees with known assessment

408

Computing the distance of each employee of the one or more employees from the reference set of employees

410

Determining if the distance is below a predetermined threshold

412

Labeling each employee of the one or more employees as non high potential employees when distance is not below the predefined threshold

414

Labeling each employee of the one or more employees as non high potential employees when distance is not below the predefined threshold

416

**FIG. 4**

Europäisches
Patentamt

European
Patent Office

Office européen
des brevets

# EUROPEAN SEARCH REPORT

Application Number

EP 16 15 5397

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| | The claimed subject-matter, with due regard to the description and drawings in accordance with Art. 92 EPC, relates to processes comprised in the list of subject-matter and activities excluded from patentability under Art. 52(2) and (3) EPC. The information technology employed as an enabler for carrying out said processes is so well-known that its existence at the relevant date cannot reasonably be disputed. The claimed technical features, namely computing means with a processor and a memory, are therefore considered to be part of the notorious knowledge, for which no documentary evidence is deemed necessary. (see Guidelines for Examination in the European Patent Office, B-VIII, 2.2.1)<br>----- | | INV.<br>G06Q10/10<br>G06Q10/06 |

TECHNICAL FIELDS
SEARCHED       (IPC)

G06Q

The present search report has been drawn up for all claims

| Place of search | Date of completion of the search | Examiner |
|---|---|---|
| The Hague | 16 June 2016 | De Smet, Michaël |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

................................................................
& : member of the same patent family, corresponding
    document

EPO FORM 1503 03.82 (P04C01)

**EP 3 057 046 A1**

**REFERENCES CITED IN THE DESCRIPTION**

**Patent documents cited in the description**

- IN 480MUM2015